**Europäisches Patentamt**

**European Patent Office**

**Office européen des brevets**

(19)

(11) Veröffentlichungsnummer: **0 035 181**
**B1**

(12) EUROPÄISCHE PATENTSCHRIFT

(45) Veröffentlichungstag der Patentschrift:
16.05.84

(51) Int. Cl.³: **H 04 Q 11/04, H 04 J 3/00**

(21) Anmeldenummer: 81101193.1

(22) Anmeldetag: 19.02.81

(54) Anordnung zum kanalindividuellen Auslösen und Sperren von Fernsprechkanälen in Kennzeichenumsetzern eines Zeitmultiplexsystems für Pulscodemodulation.

(30) Priorität: 28.02.80 DE 3007586

(43) Veröffentlichungstag der Anmeldung:
09.09.81 Patentblatt 81/36

(45) Bekanntmachung des Hinweises auf die Patenterteilung:
16.05.84 Patentblatt 84/20

(84) Benannte Vertragsstaaten:
AT BE CH FR GB IT LI LU NL SE

(56) Entgegenhaltungen:
DE - A - 2 132 588
DE - A - 2 828 092

SIEMENS ZEITSCHRIFT, 49.Jahrgang Heft 7, Juli 1975 Berlin (West) und München (DE) C. EHRICKE und V.GIESEKE "Kennzeichenumsetzergerät im Zeitmultiplex-Übertragungssystem PCM 30" Seiten 466-472

(73) Patentinhaber: SIEMENS AKTIENGESELLSCHAFT, Berlin und München Wittelsbacherplatz 2, D-8000 München 2 (DE)

(72) Erfinder: Ehricke, Claus, Dipl.-Ing., Schuckerstrasse 14/9, D-8000 München 70 (DE)

## Anordnung zum kanalindividuellen Auslösen und Sperren von Fernsprechkanälen in Kennzeichenumsetzern eines Zeitmultiplexsystems für Pulscodemodulation

Die Erfindung bezieht sich auf eine Anordnung zum Auslösen und Sperren von Fernsprechkanälen in Kennzeichenumsetzern eines Zeitmultiplexsystems für Pulscodemodulation in einer Endstelle mit wenigstens einem kanalindividuellen »gehenden« oder »kommenden« Kennzeichenumsetzer und einer Überwachungseinrichtung mit einem bei Fehlern zeitgleich und einem bei Störungen zeitdifferent auftretenden Alarmsignal.

Kennzeichenumsetzer sind in der »Siemens-Zeitschrift«, 49 (1975) 7, S. 466 bis 472 und in »Telecom-Report« 2 (1979), Beiheft »Digital-Übertragungstechnik«, S. 65 bis 71 beschrieben.

Eine Kennzeichenumsetzereinrichtung gliedert sich in zentrale und periphere Teile. Zu letzteren zählen die kanalindividuellen »gehenden« und »kommenden« Kennzeichenumsetzer, die zur Aufnahme und Abgabe vermittlungstechnischer Zeichen mit entsprechenden Schaltungen ausgerüstet sind. Die zentralen Einrichtungen enthalten unter anderem Überwachungsschaltungen, die interne Gerätefehler oder Störungen der einlaufenden Signale erkennen lassen. Ein Ansprechen bestimmter Überwachungsfunktionen soll dabei zum sofortigen oder zum verzögerten Auslösen belegter Kanäle sowie zum sofortigen Sperren unbelegter Kanäle führen. Das verzögerte Auslösen soll beispielsweise kurzzeitige Ausfälle des Rahmensynchronismus überbrücken. Außerdem soll in solchen Fällen auch der Zeichenaustausch nicht sofort unterbrochen werden. In jenen zentralen Teilen, in denen die Kennzeichen lediglich zeitlich gemultiplext werden, ist keine Bewertung des Signalinhalts vorgesehen. Die Signale lassen sich hier generell nur sofort oder verzögert auf einen bestimmten Binärwert, beispielsweise »1«, setzen. Die Wirkung auf das Sperren und das Auslösen von Verbindungen kann also nur unterschiedslos unmittelbar oder verzögert erfolgen.

Aufgabe der Erfindung ist es, unabhängig vom Vorhandensein eines zentralen Verarbeitungsteils ein kanalindividuelles, zeitdifferenziertes Auslösen und Sperren von Fernsprechkanälen zu realisieren.

Ausgehend von einer Anordnung der einleitend geschilderten Art wird diese Aufgabe erfindungsgemäß bei einer Endstelle mit »gehenden« Kennzeichenumsetzern dadurch gelöst, daß in der Überwachungseinrichtung ein erster Signalausgang für das erste Alarmsignal mit dem Setzeingang der Kippstufe für Beginn-/Schlußzeichen und den Setzeingängen evtl. weiterer Kippstufen im Empfangsteil des »gehenden« Kennzeichenumsetzers und mit je einem Eingang eines NOR-Gatters wenigstens für Belegen/Auslösen und Wahl im Sendeteil des »gehenden« Kennzeichenumsetzers verbunden sind und ein zweiter Signalausgang für das zweite Alarmsignal mit dem Setzeingang einer Kippstufe für Belegungsbereit/Sperre im Empfangsteil des »gehenden« Kennzeichenumsetzers verbunden ist. Bei einer Endstelle mit »kommenden« Kennzeichenumsetzern wird diese Aufgabe dadurch gelöst, daß für das erste Alarmsignal mit einem Eingang eines NOR-Gatters für Beginn-/Schlußzeichen und mit je einem Eingang evtl. weiterer NOR-Gatter im Sendeteil des »kommenden« Kennzeichenumsetzers und mit dem Setzeingang wenigstens der Kippstufe für Belegen/Auslösen und der Kippstufe für Wahl im Empfangsteil des »kommenden« Kennzeichenumsetzers verbunden sind und daß ein vierter Signalausgang für das zweite Alarmsignal mit einem Eingang eines NOR-Gatters für Belegungsbereitschaft Sperre im Sendeteil des »kommenden« Kennzeichenumsetzers verbunden ist.

Dieser Lösung kommt entgegen, daß die einzelnen Schaltungskomplexe für Sperren und Auslösen in den peripheren Kennzeichenumsetzern bereits getrennt ausgeführt sind, so daß sich sehr leichte Eingriffsmöglichkeiten für die zeitlich differenzierte Behandlung im Alarmfall ergeben.

Anhand eines Ausführungsbeispiels wird die Erfindung nachstehend näher erläutert.

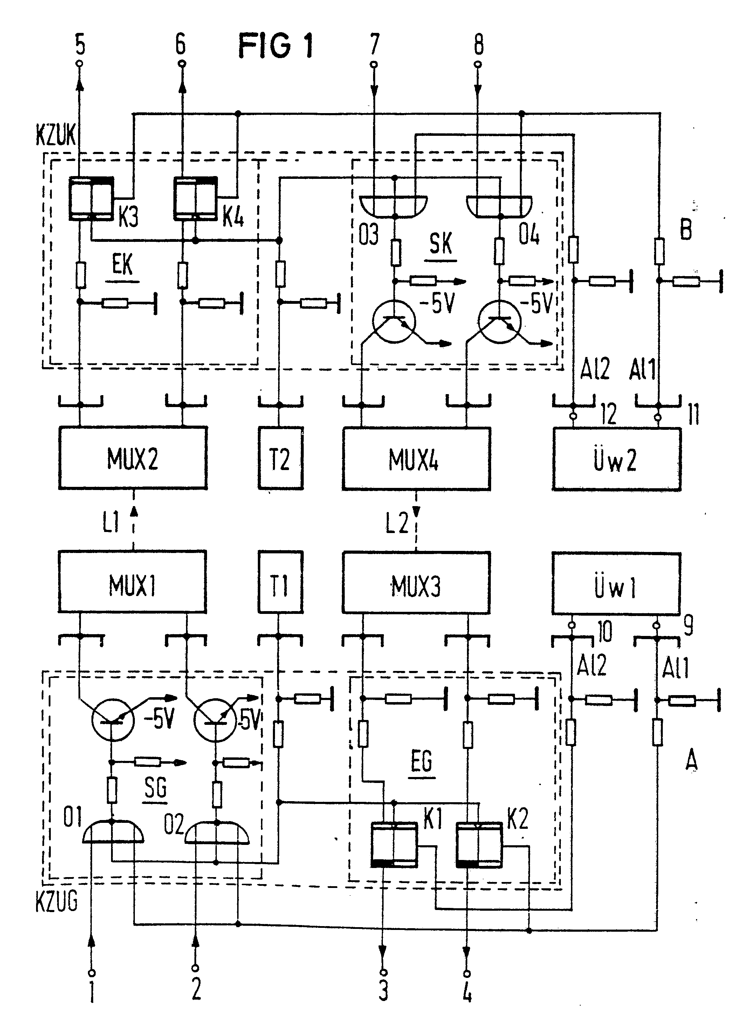

Die Fig. 1 zeigt ein Zeitmultiplexsystem für Pulscodemodulation mit Endstellen A und B. Das System enthält zur Übertragung in der einen Richtung Multiplexgeräte MUX1 und MUX2 sowie eine Übertragungsstrecke L1 und für die Übertragung in der Gegenrichtung Multiplexgeräte MUX3 und MUX4 sowie eine Übertragungsstecke L2. In der Endstelle A ist weiter eine Taktversorgung T1 und eine Überwachungseinrichtung Üw1 vorgesehen. Entsprechend enthält die Endstelle B eine Taktversorgung T2 und eine Überwachungseinrichtung Üw2. Die Endstelle A enthält weiter einen »gehenden« Kennzeichenumsetzer KZU G mit einem Sendeteil SG und einem Empfangsteil EG. Entsprechend enthält die Endstelle B einen »kommenden« Kennzeichenumsetzer KZU K mit einem Sendeteil SK und einem Empfangsteil EK.

Die Multiplexgeräte sind handelsüblich und beispielsweise in dem Prospekt der Siemens AG »Time-division multiplex systems PCM 30 and PCM 120«, Order No. S 42 022-A709-A1-1-7629, insbesondere in der Figur auf Seite 3 beschrieben. Die Elemente MUX1 bis MUX4 entsprechen der »Multiplex unit« im Prospekt ohne die Kanaleinheiten und ohne die Überwachungseinrichtung.

Die genannte Figur zeigt sowohl in der »Multiplex unit« als auch im »SC equipment« Überwachungseinrichtungen (Supervisory section). Die Überwachungseinrichtungen Üw1 und Üw2 nach der Erfindung übernehmen jeweils Aufgaben beider bekannter Überwachungseinrichtungen und sind in F i g. 2 detailliert dargestellt.

Die Sendeteile SG und SK enthalten jeweils mehrere Teilschaltungen mit einem NOR-Gatter und einem Transistor. Es sind jedoch jeweils nur zwei Teilschaltungen dargestellt, die über eine Busleitung mit dem zugehörigen Multiplexgerät verbunden sind. Die Empfangsteile EG und EK enthalten jeweils mehrere Teilschaltungen mit einer Kippstufe. Auch hier sind nur zwei Teilschaltungen dargestellt, die ebenfalls über eine Busleitung mit dem zugehörigen Multiplexgerät verbunden sind.

Die Überwachungsschaltungen Üw1 und Üw2 enthalten jeweils einen Signalausgang 9 bzw. 11 für ein Alarmsignal Al1 und einen Signalausgang 10 bzw. 12 für ein Alarmsignal Al2. Beide Alarmsignale laufen jeweils auf Busleitungen.

Die Anschlüsse 1 und 5 dienen für Belegen und Auslösen, die Anschlüsse 2 und 6 sind für Wählimpulse vorgesehen, die Anschlüsse 3 und 7 dienen für Belegungsbereitschaft und Sperre und die Anschlüsse 4 und 8 sind für Beginn- und Schlußzeichen vorgesehen.

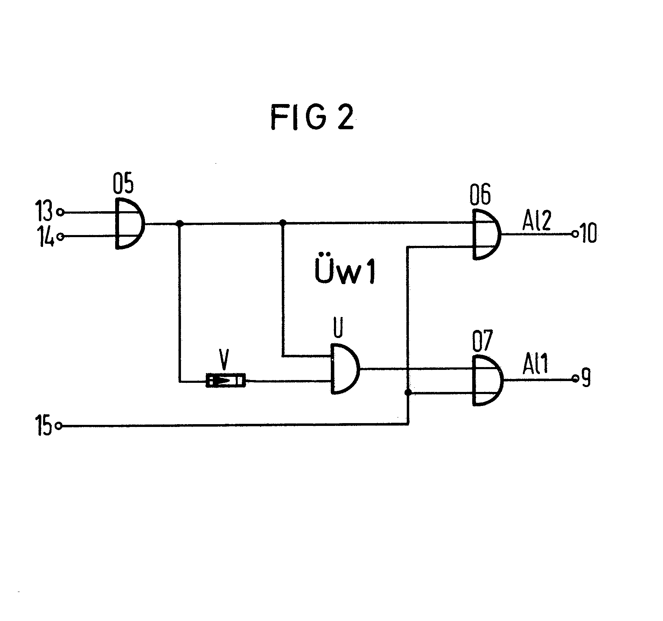

Den Aufbau beispielsweise der Überwachungseinrichtung Üw1 zeigt Fig. 2. Die Einrichtung enthält ODER-Gatter O5 bis O7, ein UND-Gatter U und ein Verzögerungsglied V mit einer Verzögerungszeit von beispielsweise 1—2 s. An den Eingang 13 gelangen Störungsmeldungen wie Synchronisierungsausfall. An den Eingang 14 werden Fehlermeldungen aus den zugehörigen Multiplexgeräten und an den Eingang 15 Fehlermeldungen aus dem Zentralteil des zugehörigen Kennzeichenumsetzers angelegt. Diese Meldesignale ergeben gemäß der Logik das verzögerte erste Alarmsignal Al1 und das unverzögerte zweite Alarmsignal Al2.

Bei einem Zeichenaustausch über das Zeitmultiplexsystem durchlaufen die Vorwärtszeichen in der Endstelle A den Sendeteil SG des »gehenden« Kennzeichenumsetzers KZU G und in der Endstelle B den Empfangsteil EK des »kommenden« Kennzeichenumsetzers KZU K. In der Gegenrichtung durchlaufen die Rückwärtszeichen in der Endstelle B den Sendeteil SK im »kommenden« Kennzeichenumsetzer KZU K und in der Endstelle A den Empfangsteil EG des »gehenden« Kennzeichenumsetzers KZU G. Zu den Vorwärtszeichen zählen beispielsweise das Belegungs- bzw. das Auslösekriterium sowie die Wahlinformation. Zu den Rückwärtszeichen zählt u. a. das Kriterium für Belegungsbereitschaft und Sperren sowie das Beginn- und Schlußzeichen.

Im Fehler- oder Störungsfall sollen diese Kriterien teils unverzögert, teils verzögert in den Zustand gebracht werden, der dem Binärwert »1« im betreffenden Kennzeichenbit entspricht.

Aus den zentralen Überwachungseinrichtungen Üw1 und Üw2 führen zu diesem Zweck zwei getrennte Alarmbusleitungen zu den Kennzeichenumsetzern. Das erste Alarmsignal Al1 tritt bei Fehlern im Signal sofort und bei Störungen im System verzögert auf, um die Kennzeichenübertragung zu unterbinden. Das zweite Alarmsignal Al2 tritt sowohl bei Störungen als auch bei Fehlern im System sofort auf und verhindert eine Neubelegung von Fernsprechkanälen. Mit diesen beiden Alarmsignalen werden die Sendeteile EG und EK sowie die Sendeteile SG und SK unterschiedlich gesteuert. Das zweite unverzögerte Alarmsignal Al2 wird an den Empfangsteil EG des »gehenden« Kennzeichenumsetzers bzw. den Sendeteil SK des »kommenden« Kennzeichenumsetzers geführt, über die das Kriterium für Belegungsbereitschaft oder Sperre läuft. Das evtl. verzögerte erste Alarmsignal Al1 wird an den Sendeteil SG bzw. an den Empfangsteil EK geführt, über die das Kriterium für Belegung und Auslösen läuft sowie unmittelbar oder über den Belegungskreis zum Sendeteil SG bzw. Empfangsteil EK und zum Empfangsteil EG bzw. Sendeteil SK, über die die weiteren Zeichen wie Wahl, Beginn- und Schlußzeichen laufen.

Im Betriebsfall führen beide Alarmleitungen Spannung, so daß der Zeichenaustausch ungehindert über alle Sende- und Empfangsteile verläuft. Im Fehler- und im Störungsfall liegt an den Alarmleitungen Erdpotential, das die Sendeteile blockiert und die Empfangsteile, in denen die Information zwischengespeichert ist, in einen definierten zeichenfreien Zustand versetzt.

Im Alarmfall führt das unverzögerte zweite Alarmsignal Al2 stets zum sofortigen Sperren der unbelegten Fernsprechkanäle und zwar im Empfangsteil EG durch Setzen der betreffenden Kippstufen vom belegungsbereiten (Binärwert »0«) in den gesperrten (Binärwert »1«) Zustand bzw. im »kommenden« Kennzeichenumsetzer durch Sperren des Sendeteils SK (Binärwert »1«), wodurch die Übertragung der Belegungsbereitschaft zur anderen Endstelle A unterbunden wird.

Mit dem evtl. verzögerten ersten Alarmsignal Al1 werden dagegen die Kriterien für die Belegung und die übrigen Zeichen ggf. erst nach entsprechender Wartezeit abgebrochen und führen danach in der eigenen wie in der fernen Endstelle zum Auslösen und zeichenfreien Zustand (Binärwert »1«).

## Patentansprüche

1. Anordnung zum Auslösen und Sperren von Fernsprechkanälen in Kennzeichenumsetzern eines Zeitmultiplexsystems für Pulscodemodulation in einer Endstelle mit wenigstens einem kanalindividuellen »gehenden« Kennzeichenumsetzer (KZU G) und einer Überwachungseinrichtung (Üw1) mit jeweils einem bei Fehlern zeitgleich und einem bei Störungen zeitdifferent auftretenden Alarmsignal (Al1, Al2), dadurch gekennzeichnet, daß in jeder Überwachungseinrichtung (Üw1) ein erster Signalausgang (9) für das erste Alarmsignal (Al1) mit dem Setzeingang der Kippstufe (K2) für Beginn-/Schlußzeichen und den Setzeingängen evtl. weiterer Kippstufen im Empfangsteil (EG) des »gehenden« Kennzeichenumsetzers und mit je einem Eingang eines NOR-Gatters (O1, O2) wenigstens für Belegen/Auslösen und Wahl im Sendeteil (SG) des »gehenden« Kennzeichenumsetzers verbunden sind und ein zweiter Signalausgang (10) für das zweite Alarmsignal (AI2) mit dem Setzeingang einer Kippstufe (K1) für Belegungsbereit/Sperre im Empfangsteil (EG) des »gehenden« Kennzeichenumsetzers verbunden ist.

2. Anordnung zum Auslösen und Sperren von Fernsprechkanälen in Kennzeichenumsetzern eines Zeitmultiplexsystems für Pulscodemodulation in einer Endstelle mit wenigstens einem kanalindividuellen »kommenden« Kennzeichenumsetzer (KZU K) und einer Überwachungsschaltung (Üw2) mit jeweils einem bei Fehlern zeitgleich und einem bei Störungen zeitdifferent auftretenden Alarmsignal (AI1, AI2), dadurch gekennzeichnet, daß ein dritter Signalausgang (11) für das erste Alarmsignal (AI1) mit einem Eingang eines NOR-Gatters (O4) für Beginn-/Schlußzeichen und mit je einem Eingang evtl. weiterer NOR-Gatter im Sendeteil (SK) des »kommenden« Kennzeichenumsetzers und mit dem Setzeingang wenigstens der Kippstufe (K3) für Belegen/Auslösen und der Kippstufe (K4) für Wahl im Empfangsteil (EK) des »kommenden« Kennzeichenumsetzers verbunden sind und daß ein vierter Signalausgang (12) für das zweite Alarmsignal (AI2) mit einem Eingang eines NOR-Gatters (O3) für Belegungsbereitschaft/Sperre im Sendeteil (SK) des »kommenden« Kennzeichenumsetzers verbunden ist.

## Claims

1. Arrangement for clearing and blocking telephone channels in signalling converters of a t.d.m. system for pulse code modulation in a terminal station having at least one channel-individual »outgoing« signalling converter (KZU G) and a monitoring device (Üw1) having an alarm signal (AI1, AI2) which occurs isochronously in the event of errors and heterochronously in the event of interference, characterized in that in each monitoring device (Üw1), a first signal output (9) for the first alarm signal (AI1) is connected to the setting input of the flip-flop (K2) for off-hook/on-hook signals and to the setting inputs of possibly further flip-flops in the receiving section (EG) of the »outgoing« signalling converter and to an input of a NOR-gate (O1, O2) at least for seizing/clearing and selection in the transmitting section (SG) of the »outgoing« signalling converter, and a second signal output (10) for the second alarm signal (AI2) is connected to the setting input of a flip-flop (K1) for ready-to-seize/blocking in the receiving section (EG) of the »outgoing« signalling converter.

2. Arrangement for clearing and blocking telephone channels in signalling converters of a t.d.m. system for pulse modulation in a terminal station having at least one channel-individual »incoming« signalling converter (KZU K) and a monitoring circuit (Üw2) having an alarm signal (AI1, AI2) which occurs isochronously in the event of errors and heterochronously in the event of interference, characterized in that a third signal output (11) for the first alarm signal (AI1) is connected to an input of a NOR-gate (O4) for off-hook/on-hook signals and to a respective input of possibly further NOR-gates in the transmitting section (SK) of the »incoming« signalling converter and to the setting input of at least the flip-flop (K3) for seizing/clearing and the flip-flop (K4) for selection in the receiving section (EK) of the »incoming« signalling converter, and that a fourth signal output (12) for the second alarm signal (AI2) is connected to an input of a NOR-gate (O3) for readiness-to-seize/blocking in the transmitting section (SK) of the »incoming« signalling converter.

## Revendications

1. Circuit pour la libération et le blocage de canaux téléphoniques dans des convertisseurs de signaux caractéristiques d'un système de multiplexage par répartition dans le temps pour une modulation par impulsions codées dans un poste terminal comportant au moins un convertisseur de signaux caractéristiques »de dérpart« individuel à chaque canal (KZU G) et un dispositif de surveillance (Üw1) délivrant respectivement des signaux d'alarme (AI1, AI2) apparaissant simultanément dans le temps en cas de défauts et à des instants différents en cas de perturbations, caractérisé par le fait que dans chaque dispositif de surveillance (Üw1) une première sortie de signaux (9) pour le premier signal d'alarme (AI1) est reliée à l'entrée de mise dans l'état excité de la bascule (K2) pour le signal de début/fin et aux entrées de mise dans l'état exité d'autres bascules éventuelles dans la partie de réception (EG) du convertisseur de signaux caractéristiques »de départ« et à une entrée respective d'une porte OU (O1, O2) au moins pour l'occupation/libération et la sélection dans la partie d'émission (SG) du convertisseur de signaux caractéristiques »de départ«, et qu'une seconde sortie de signaux (10) pour le second signal d'alarme (AI2) est reliée à l'entrée de mise dans l'état excité d'une bascule (K1) pour la disponibilité d'occupation/blocage dans la partie de réception (EG) du convertisseur de signaux caractéristiques »de départ«.

2. Circuit pour la libération et le blocage de canaux téléphoniques dans des convertisseurs de signaux caractéristiques d'un système de multiplexage par répartition dans le temps pour une modulation par impulsions codées dans un poste terminal comportant au moins un convertisseur de signaux caractéristiques »d'arrivée« individuel à chaque canal (KZU K) et un dispositif de surveillance (Üw1) délivrant respectivement des signaux d'alarme (AI1, AI2) apparaissant simultanément dans le temps en cas de défauts et à des instants différents en cas de perturbations, caractérisé par le fait, qu'une troisième sortie de signaux (11) pour le premier signal d'alarme (AI1) est reliée à une entrée d'une porte OU (O4) pour le signal de début/fin et à une entrée respective d'autres portes OU éventuelles dans la partie d'émission (SK) du convertisseur de signaux caractéristiques »d'arrivée« et à l'entrée de mise dans l'état excité au moins de la bascule (K3) pour l'occupation/libération et de la bascule (K4) pour la sélection dans la partie de réception (EK) du convertisseur de signaux caractéristiques »d'arrivée«, et qu'une quatrième sortie de signaux (12) pour le second signal d'alarme (Al2) est relié à une entrée d'une porte $\overline{\text{OU}}$ (O3) pour la disponibilité d'occupation/blocage dans la partie d'émission (SK) du convertisseur de signaux caractéristiques »d'arrivée«.

**FIG 1**

# FIG 2